Europäisches Patentamt

European Patent Office

Office européen des brevets

(19)

(11) Veröffentlichungsnummer: **0 146 715**
. **B1**

(12) **EUROPÄISCHE PATENTSCHRIFT**

(45) Veröffentlichungstag der Patentschrift: **17.10.90**

(21) Anmeldenummer: **84112696.4**

(22) Anmeldetag: **20.10.84**

(51) Int. Cl.⁵: **B 60 C 15/04**

(54) Wulstaufbauteil für Fahrzeugluftreifen.

(30) Priorität: **21.12.83 DE 3346107**

(43) Veröffentlichungstag der Anmeldung:
**03.07.85 Patentblatt 85/27**

(45) Bekanntmachung des Hinweises auf die
Patenterteilung:
**17.10.90 Patentblatt 90/42**

(84) Benannte Vertragsstaaten:
**AT BE CH DE FR GB IT LI LU NL SE**

(56) Entgegenhaltungen:
**EP-A-01 111 18**
**DE-A-2 159 083**
**DE-A-3 007 772**
**DE-B-2 830 939**
**FR-A-2 303 676**
**GB-A-2 078 178**
**US-A-3 381 736**
**US-A-4 168 193**

(73) Patentinhaber: **Continental Aktiengesellschaft**
**Königsworther Platz 1**
**D-3000 Hannover 1 (DE)**

(72) Erfinder: **Rach, Heinz-Dieter, Dipl.-Ing.**
**Planetenring 32**
**D-3008 Garbsen 1 (DE)**
Erfinder: **Frerichs, Udo, Dipl.-Ing.**
**Buchenweg 7**
**D-3012 Langenhagen 8 (DE)**
Erfinder: **Klose, Hans-Ulrich, Dipl.-Ing.**
**Hauptstrasse 15**
**D-3061 Wiedensahl (DE)**

Courier Press, Leamington Spa, England.

**Beschreibung**

Verfahren zur Herstellung eines Fahrzeugluftreifens.

Die Erfindung betrifft ein Verfahren zur Herstellung eines Fahrzeugluftreifens mit einer Reifenkarkasse und einem ringförmigen Wulstaufbauteil mit einem zu- und/oder druckfesten Wulstkern, der aus metallischen Festigkeitsträgern oder einem Material ähnlich hoher Festigkeit besteht, weiterhin mit einem den Wulstkern zumindest überwiegend umgebenden Gummiprofil.

In einer älteren Patentanmeldung (EP—A—0 111 118) wurde ein Fahrzeugrad vorgeschlagen, bei dem ein Reifen mit seinen Wülsten am radial inneren Umfang einer einteiligen Felge befestigt ist und bei dem zur Einsparung eines Montagehochbettes die Wulstkerne in dem Sinne exzentrisch in den Reifenwülsten angeordnet sind, daß beim montierten Reifen der Abstand vom Mittelpunkt eines Kernquerschnitts zum radial äußeren Wulstrand größer ist als der zum axial inneren Wulstrand. Bei der Herstellung eines solchen Reifens kommt es auf äußerst kleine Toleranzen im Hinblick auf die exakte Anordnung des Wulstkerns im Reifenwulst an.

Aus der DE—A—2 159 083 ist ein Fußring mit einem metallischen Wulstkern für einen sogenannten Gieß- bzw. Spritzreifen bekannt. Um die Dauerstandfestigkeit der Verbindung zwischen dem Fußring und der Reifenseitenwand zu verbessern, wird in der Druckschrift vorgeschlagen, daß die Haftfläche des Fußrings mit über ihren Umfang verteilt angeordneten Vertiefungen versehen ist. Der Fußring stellt den vollständigen Wulstbereich des endgültigen Reifens dar.

In der US—A—4 168 193 wird ein Verfahren zur Herstellung eines Gummiartikels, insbesondere einer Einheit aus Wulstkern und Kernreiter beschrieben. Dabei wird ein Zentrierring fest mit dem Kernring verbunden und anschließend in der Form verklemmt. Danach wird die Gummimasse im Spritzverfahren unter hohem Druck eingebracht, wobei sich der Kernring nicht verschieben darf. Besonders wichtig ist eine Vermeidung einer Anvulkanisation. Der Kernreiter befindet sich im wesentlichen auf der radial äußeren Seite des Wulstkerns. Um eine gute Haftung zu erzielen, sind auch die axialen Flächen des Wulstkerns mit einer dünnen Gummischicht bedeckt. Mit diesem vorbekannten Aufbauteil ist eine exakte Positionierung des Wulstkerns im Reifenwulst nicht möglich, da zum einen der Kern beim Einbringen in einen Reifenrohling und anschließenden Vulkanisieren in weiteren Gummischichten im Bereich des umgeschlagenen Karkaßendes "schwimmen" kann und da zum anderen der unvulkanisierte Kernreiter bei der eigentlichen Reifenvulkanisation ebenfalls keine Stützwirkung auf den Wulstkern ausüben kann.

Der Erfindung liegt die Aufgabe zugrunde, einen Weg aufzuzeigen, wie bei einem Fahrzeugluftreifen, insbesondere einem Reifen gemäß EP—A—0 111 118, eine exakte Anordnung des Wulstkerns im Reifenwulst mit äußerst kleinen Toleranzen erreicht wird.

Diese Aufgabe wird bei einem Verfahren der eingangs genannten Art erfindungsgemäß dadurch gelöst, daß das Wulstaufbauteil bereits vor dem Einbau in einen Reifenrohling vorvulkanisiert ist und daß die Lage des Wulstkerns relativ zum Gummiprofil beim Vorvulkanisieren durch Abstandselemente im Gummiprofil und/oder an der Vulkanisierform fixiert wird, daß das Gummiprofil im wesentlichen mit einem runden Querschnitt, jedoch an einer Stelle des Querschnittsumfangs mit einer Fixierrippe hergestellt wird und daß die Reifenkarkasse durch Umschlingen des Wulstaufbauteils im Reifenwulst verankert wird, wobei die Fixierrippe des Wulstaufbauteils in den Zwischenraum zwischen Reifenkarkasse und umgeschlagenem Karkaßende hineinragt.

Durch den erfindungsgemäßen Einsatz eines vorvulkanisierten Wulstaufbauteils wird ein bereits ausgeformtes Bauteil bei der Reifenkonfektion eingesetzt, das aufgrund seiner Formstabilität die Kontur des Reifenwulstes nach der Vulkanisation des gesamten Reifens vorbestimmt. Gemäß der Erfindung weist das im Querschnitt im wesentlichen runde Wulstaufbauteil an einer Stelle eine umlaufende Fixierrippe auf, die bei der Konfektionierung des Reifens zwischen Karkasse und umgeschlagenem Karkaßende zu liegen kommt. Dadurch wird erreicht, daß das Wulstaufbauteil in der Reifenvulkanisierform während der Vulkanisation seine Lage nicht mehr verändern kann, so daß damit auch die Position des Wulstkerns innerhalb des endgültigen Reifenwulstes festgelegt ist.

Die Herstellung des Wulstaufbauteils geschieht in vorteilhafter Weise in einer separaten Vulkanisierform, indem zunächst ein Wulstkern eingelegt wird und dann der Hohlraum durch Einlegen oder Einspritzen von Kautschuk ausgefüllt wird. Es ist besonders wichtig, daß Maßnahmen ergriffen werden, um die Position des Wulstkerns innerhalb des Profilgummiquerschnitts genau festzulegen. Solche Maßnahmen können zum einen darin bestehen, die Vulkanisierform mit Abstandselementen in form von Stiften oder Stegen zu versehen, zum anderen können Abstandselemente, z.B. umlaufende Schraubenfedern dauerhaft in dem Gummiprofil des Wulstaufbauteils eingebettet sein.

Nachfolgend wird ein Ausführungsbeispiel eines Wulstaufbauteils und eines Fahrzeugrads beschrieben, dessen Reifen in jedem Wulst ein Wulstaufbauteil enthält.

Es zeigt:

Fig. 1 einen Teilbereich eines Wulstaufbauteils in einer perspektivischen Ansicht,

Fig. 2 ein Wulstaufbauteil in einem radialen Teilschnitt (in einer Vulkanisierform),

Fig. 3 ein Wulstaufbauteil mit einer eingebetteten Schraubenfeder in einem radialen Teilschnitt,

Fig. 4 einen Kugelfaden als Abstandselement,

Fig. 5 einen Reifen in Vulkanisierstellung mit einem eingebauten Wulstaufbauteil in einem radialen Teilschnitt,

Fig. 6 ein Fahrzeugrad in einem radialen Teilschnitt.

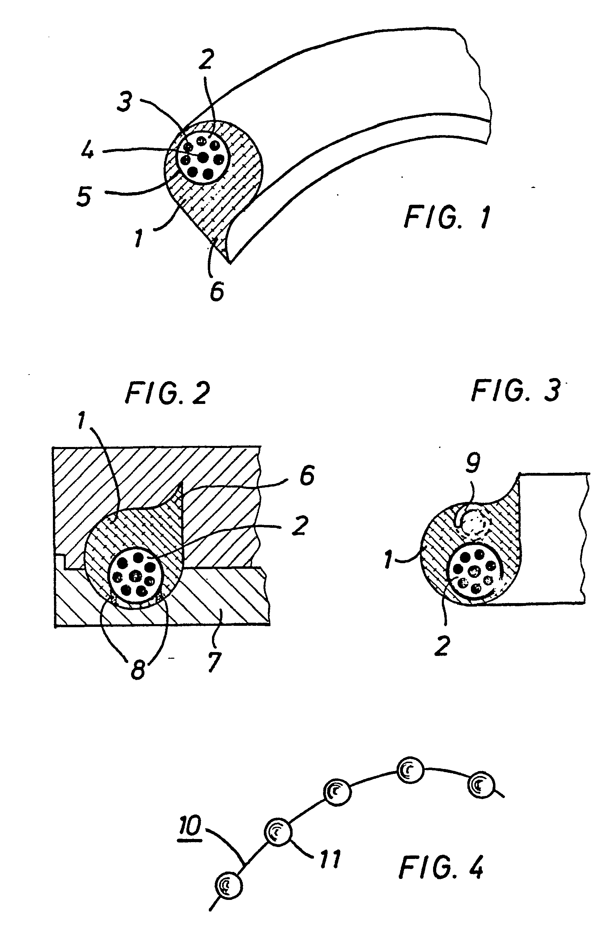

Das ringförmige Wulstaufbauteil gemäß Fig. 1 besteht aus einem Gummiprofil 1 und einem darin eingebetteten Wulstkern 2, vorwiegend ein Kabelkern mit mehreren Metallkabeln 3, die um eine Innenseele 4 herum gruppiert sind. Der Kabelkern 2 ist mit einem textilen Gewebe 5 ummantelt, wobei das Gewebe 5 mit einer gewollt geringen Haftung zu den benachbarten Bereichen des Wulstaufbauteils eingebettet ist. Damit ergibt sich eine beträchtliche Drehbarkeit des Profilgummis 1 um den Wulstkern 2, so daß nach dem Einbau des Wulstaufbauteils in den Reifen ein sogenannter Drehwulst entsteht.

Das Aufbauteil der Fig. 1 besitzt eine im wesentlichen runde Querschnittsform, von der lediglich schräg unten, d.h. auf der radial inneren Seite aufgrund einer umlaufenden spitzen Fixierrippe 6 aus dem Material des Profilgummis 1 abgewichen wird. Bei Bedarf kann die Fixierrippe 6 auch aus einem Gummi anderer Shore-Härte bestehen. Für das Gummiprofil 1 hat sich eine Härte von ca. 90 Shore A (nach der Vulkanisation des vollständigen Reifens) als günstig erwiesen. Wie weiter unten bei der Beschreibung des Fahrzeugrads klar werden wird, ergibt das Wulstaufbauteil der Fig. 1 einen Reifen, dessen Wülste unter Vorspannung auf der Felge montiert sind, in der Weise, daß sie sich bei einem Luftdruckverlust von allein in eine andere Stellung drehen.

Fig. 2 zeigt ein Wulstaufbauteil, das sich noch in einer Vulkanisierform 7 befindet. Da es sehr wichtig ist, daß der Wulstkern 2 innerhalb der Querschnittsfläche des Gummiprofils 1 eine ganz bestimmte Position mit möglichst geringen Toleranzen einnimmt und diese während der Vorvulkanisation auch beibehält, befinden sich in der unteren Hälfte der Vulkanisierform 7 Abstandselemente 8 in Form von Haltestiften oder zumindest teilweise umlaufenden Halterippen. Der Wulstkern 2 left sich während der Vorvulkanisation aufgrund seines großen Eigengewichtes auf die Abstandselemente 8 der Vulkanisierform 7 auf, so daß er nicht in dem ihn umgebenden weichen Kautschuk "wegschwimmen" kann. Die nach der Entformung wegen der Haltestifte bzw. Halterippen 8 zurückbleibenden Öffnungen lassen sich vor dem Einbau des Wulstaufbauteils in den Reigen bzw. während der Reifenvulkanisation durch sich hineindrückenden Kautschuk verschließen.

Es sollte darauf hingewiesen werden, daß beim Wulstaufbauteil der Fig. 2 die Spitze der Fixierrippe 6 nach oben weist und daß der kürzeste Abstand vom Wulstkern 2 zum Rand des Wulstaufbauteils sich gegenüberliegend im unteren Bereich befindet. Dat hat zur Folge, daß nach dem Einbau in einen Reifen und nach der Montage des Reifens die Fixierrippe spannungsfrei ziemlich genau nach axial außen weist, so daß der Wulstbereich des Reifens ohne Vorspannung auf der Felge montiert ist.

Beim Wulstaufbauteil nach Fig. 3 befindet sich im Innern des Gummiprofils 1 eine umlaufende Schraubenfeder 9, die ebenfalls als Abstandselement zur exakten Positionierung des Wulstkerns 2 dient und zusätzlich zu den Haltestiften oder Halterippen 8 der Vulkanisierform 7 oder ersatzweise eingesetzt sein kann. Das Innere der Schraubenfeder 9 sollte mit Gummi ausgefüllt sein. Es ist wichtig, eine Schraubenfeder 9 und nicht etwa einen ähnlich geformten Metallring zu verwenden, damit die relative Drehbarkeit des Gummiprofils 1 um den Wulstkern 2 erhalten bleibt (Drehachsen sind abschnittsweise Teile des Wulstkerns 2). Statt der Schraubenfeder 9 kann man auch einen Kugelfaden 10 gemäß Fig. 4 einsetzen, dessen Kugeln 11 ebenfalls als Abstandselement dienen und aus vorvulkanisiertem Gummi oder einem anderen Material bestehen können. Es kommt lediglich auf die Abstandsfunktion der "Kugeln" und nicht auf die geometrische Form an, so daß durchaus anders geformte Masseteilchen 11 zum Einsatz kommen können, die ein noch besseres Verkeilen des Wulstkerns 2 in der Vulkanisierform bewirken.

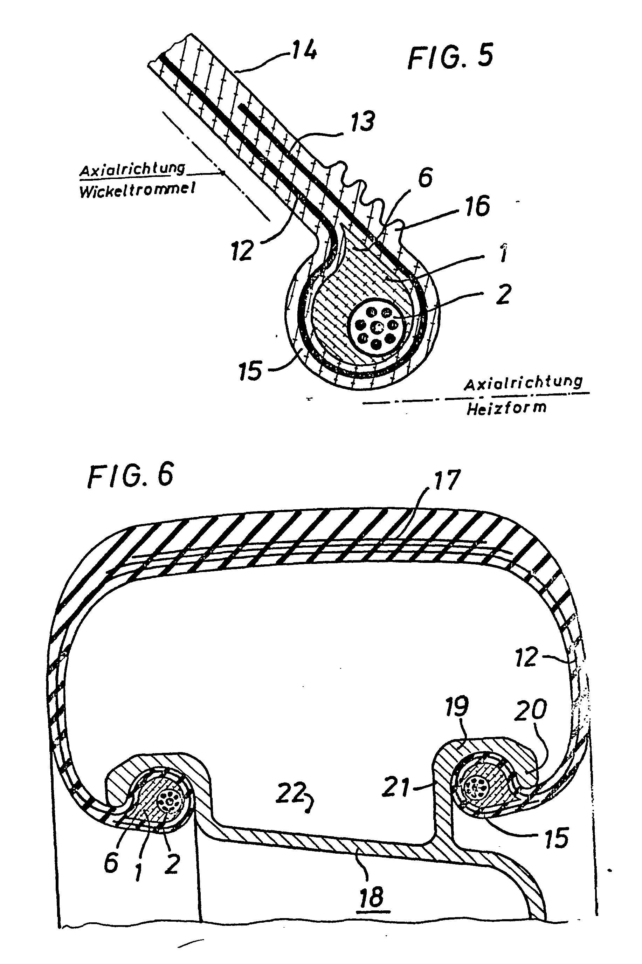

Fig. 5 zeigt einen Teil eines Reifens mit einem eingebauten Wulstaufbauteil, dessen Fixierrippe 6 mit ihrer Spitze im entspannten Zustand bezüglich der Axialrichtung einer Wickeltrommel nach axial innen weist und dort in den Zwischenraum zwischen Reifenkarkasse 12 und umgeschlagenem Karkaßende 13 hineinragt, so daß ein Verdrehen des Gummiprofils 1 relativ zur Karkasse 12 unmöglich wird. Der Reifen wird vorliegend mit seitlich nach außen geklappten Wänden 14 vulkanisiert, wie man der eingezeichneten Axialrichtung der Vulkanisierform entnehmen kann. Hiermit wird eine leichtere Abformung der im Reifeninnenraum liegenden Wulstpartien erzielt. Zur Montage des Reifens werden die Reifenwände 14 nach innen gekrempelt. Dabei führen die Reifenwülste 15 mit den Gummiprofilen 1 unter Aufbau einer Vorspannung eine Schwenkbewegung um den jeweiligen Wulstkern 2 aus und gleichzeitig eine Bewegung nach axial innen. Diese Vorspannung hat zur Folge, daß der Reifen im fertigmontierten Zustand noch vor der Beaufschlagung mit Luft mit seinen Wülsten 15 gegen die Felgenhörner drückt, so daß ein Abdichten für ein erleichtertes Aufpumpen erreicht wird. Die beim Reifen der Fig. 5 auf der Außenseite gezeigten Rippen 16 dienen der erleichterten Reifenmontage.

In Fig. 6 ist ein Fahrzeugrad mit einem vollständig montierten Reifen dargestellt. Ein Gürtelreifen mit einer Radialkarkasse 12—gegebenenfalls kann auch eine Winkelkarkasse verwendet werden—die mit ihren Enden durch Umschlingen der Wulstaufbauteile in den Wülsten 15 verankert ist, und mit einem üblichen Gürtel 17 ist derart auf einer Felge 18 montiert, daß die Wulstsitzflächen sich auf radial innen vom Felgenkranz 19 gelegenen Sitzflächen neben den nach innen sich erstreckenden Felgenhörnern 20 auf der Felge 18 befinden.

Die Reifenwülste 15 füllen im wesentlichen formschlüssig einen Raum aus, der von den Felgenhörnern 20, den Felgensitzflächen und von im Querschnitt im wesentlichen senkrecht verlaufenden Teilen 21 des Felfenkranzes 19 begrenzt wird. Durch die senkrechten Teile 21 wird auf der radial äußeren Seite der Felge 18 ein übliches Tiefbette 22 gebildet, das bei sehr breiten Reifen dazu dienen kann, den Reifen bei der Montage leichter über die einteilige Felge 18 zu bewegen. Damit der Reifen überhaupt auf die einteilige Felge 18, die im Gegensatz zu bekannten Felgen neben den Felgensitzflächen für die Wülste 15 keine Montagehochbetten aufweist, montierbar ist, ist es wichtig, daß bei ihm der Wulstkern 2 exentrisch im überwiegend runden Gummiprofil 1 und damit im Reifenwulst 15 gelagert ist, in dem Sinne, daß beim montierten Reifen der Abstand vom Mittelpunkt des Kernquerschnitts zum radial äußeren Wulstrand größer ist als der zum axial inneren Wulstrand. Weiterhin ist die bereits beschriebene Drehbarkeit des Reifenwulstes 15 um den Kern 2 erforderlich.

Für eine Reifenmontage wird zunächst die Felge 18 mit ihrer Drehachse senkrecht zur Drehachse des Reifens in den Innenraum des Reifens bewegt und dort um 90° gedreht, so daß die beiden Reifenwülste 15 seitlich außen neben den Felgenhörnern 20 liegen. Danach wird ein Wulst 15 so weit nach innen verschwenkt bzw. verdreht, daß der Bereich, in dem der Wulstkern 2 dem Wulstrand am nächsten liegt, nach radial außen zeigt. Dieser Bereich wird an einer Stelle über das Felgenhorn 20 hinweg auf die Felgensitzfläche geschoben und der Vorgang dann abschnittsweise über den gesamten Umfang wiederholt. Schließlich werden die Reigenwülste 15 in die Betriebsstellung des Reifens zurückgeschwenkt, wobei sich der wirksame Durchmesser des Reifens im radial äußeren Bereich der Reifenwülste 15 derart vergrößert, daß der Reifen einen strammen Sitz auf der Felge 18 erhält.

Je nach Auslegung des Wulstaufbauteils kann man erreichen, daß der Reifenwulst 15 im Betriebzustand spannungslos ist, ein Drehmoment im schließenden Sinne (Drücken gegen Felgenhorn 20) oder im öffnenden Sinne (Drehen in die Montagestellung) aufweist. Est ist ohne weiteres ersichtlich, daß der erste Fall beim Einbau eines Wulstaufbauteils gemäß Fig. 2 und 3, der zweite bei einem Teil gemäß Fig. 5 und der dritte bei einem Teil der Fig. 1 eintritt, wenn man berücksichtigt, daß die Wulstaufbauteile der Fig. 1 bis 5 im spannungslosen Zustand dargestellt sind. In Fig. 1 weist die Fixierrippe 6 nach radial innen in Fig. 2 und 3 nach axial außen und in Fig. 5 nach axial innen, während sie in der Betriebsstellung des Reifens immer nach axial außen zeigt.

Es sollte angemerkt werden, daß die Erfindung nicht nur bei exzentrisch gelagerten Wulstkernen 2 anwendbar ist und auch bei solchen Reifen zum Einsatz kommen kann, die radial außen an der Felge befestigt sind.

## Patentansprüche

1. Verfahren zur Herstellung eines Fahrzeugluftreifens mit einer Reifenkarkasse und einem ringförmigen Wulstaufbauteil mit einem zug- und/oder druckfesten Wulstkern (2), der aus metallischen Festigkeitsträgern (3) oder einem Material ähnlich hoher Festigkeit besteht, weiterhin mit einem den Wulstkern zumindest überwiegend umgebenden Gummiprofil (1), dadurch gekennzeichnet, daß das Wulstaufbauteil bereits vor dem Einbau in einen Reifenrohling vorvulkanisiert wird, daß die Lage des Wulstkerns (2) relativ zum Gummiprofil (1) beim Vorvulkanisieren durch Abstandselemente (8, 9, 11) im Gummiprofil (1) und/oder an der Vulkanisierform (7) fixiert wird, daß das Gummiprofil (1) im wesentlichen mit einem runden Querschnitt, jedoch an einer Stelle des Querschnittsumfangs mit einer Fixierrippe (6) hergestellt wird und daß die Reifenkarkasse (12) durch Umschlingen des Wulstaufbauteils im Reifenwulst verankert wird, wobei die Fixierrippe (6) des Wulstaufbauteils in den Zwischenraum zwischen Reifenkarkasse (12) und umgeschlagenem Karkaßende (13) hineinragt.

2. Verfahren nach Anspruch 1, dadurch gekennzeichnet, daß für eine relative Drehbarkeit von Gummiprofil (1) und Wulstkern (2) zwischen beiden eine Gewebelage (5) eingesetzt wird.

3. Verfahren nach Anspruch 2, dadurch gekennzeichnet, daß im Gummiprofil (1) dauerhaft solche Abstandselemente (9, 11) eingesetzt werden, die eine relative Drehbewegung von Gummiprofil (1) und Wulstkern (1) erlauben.

4. Verfahren nach Anspruch 1, dadurch gekennzeichnet, daß die Fixierung des Wulstkerns (2) durch Abstandselemente (8) der Vulkanisierform (7) in Form von Stiften oder Stegen geschieht.

5. Verfahren nach Anspruch 1, dadurch gekennzeichnet, daß der Wulstkern (2) exzentrisch im Gummiprofil (1) angeordnet wird, in dem Sinne, daß bei einem montierten Reifen der Abstand vom Kernmittelpunkt zum der Felgensitzfläche zugekehrten Profilgummirand wesentlich größer ist als der vom Kernmittelpunkt zum axial innen befindlichen Gummirand, wobei die 4-fache Differenzlänge etwa einer Felgenhornhöhe entspricht.

## Revendications

1. Procédé de fabrication d'un pneumatique de véhicule, comprenant une carcasse et un insert de talon de forme annulaire comportant une tringle de talon (2) résistant à la traction et/ou à la compression et formée de supports métalliques (3) résistants ou bien d'un matériau d'une résistance élevée comparable, et en outre un profil (1) en caoutchouc entourant au moins en grande partie la tringle de talon, caractérisé en ce que l'insert de talon est déjà prévulcanisé avant l'installation dans une ébauche de pneumatique et en ce que la position de la tringle de talon (2) par rapport au profil en caoutchouc (1) est fixée, lors de la prévulcanisation, par des éléments d'espacement (8, 9, 11) dans le profil en caoutchouc (1) et/ou dans le moule de vulcanisation (7), en ce que le profil en caoutchouc (1) est réalisé avec une section sensiblement circulaire mais comporte cependant une nervure de fixation (6) en un endroit du pourtour de la section et en ce que la carcasse (12) du pneumatique est ancrée dans le talon par enroulement autour de l'insert de talon, la nervure de fixation (6) de l'insert de talon pénétrant dans l'intervalle existant entre la carcasse (12) du pneumatique et son extrémité (13) ainsi enroulée.

2. Procédé selon la revendication 1, caractérisé en ce que, pour obtenir une aptitude de rotation relative entre le profil en caoutchouc (1) et la tringle de talon (2), on interpose entre les deux parties une couche de tissu (5).

3. Procédé selon la revendication 2, caractérisé en ce qu'on dispose dans le profil en caoutchouc (1) de façon permanente des éléments d'espacement (9, 11) créant une aptitude de rotation relative entre le profil en caoutchouc (1) et la tringle de talon (2).

4. Procédé selon la revendication 1, caractérisé en ce que la fixation de la tringle de talon (2) est réalisée par des éléments d'espacement (8) du moule de vulcanisation (7), se présentant sous la forme de broches ou de nervures.

5. Procédé selon la revendication 1, caractérisé en ce que la tringle de talon (2) est disposé excentriquement dans le profil en caoutchouc (1), de manière que, dans un pneumatique monté, l'espacement entre le centre de tringle et le bord du profil en caoutchouc qui est dirigé vers la surface d'assise sur la jante soit sensiblement plus grand que l'espacement entre le centre de jante et le bord du profil en caoutchouc situé axialement vers l'intérieur, le quadruple de la valeur de différence correspondant à peu près à la hauteur du rebord de jante.

## Claims

1. Method of producing a pneumatic vehicle tyre, having a tyre carcase and an annular bead extension member provided with a substantially inextensible and/or pressure-resistant bead core (2), which is formed from metallic reinforcing members (3) or is formed, at least mainly, from a material of a similarly high strength, and also provided with a rubber profile (1) which surrounds the bead core, characterised in that the bead extension member is already prevulcanised prior to being inserted into a tyre blank, the position of the bead core (2) relative to the rubber profile (1) is fixed during the prevulcanizing process by means of spacer members (8, 9, 11) in the rubber profile (1) and/or on the vulcanizing mould (7), the rubber profile (1) is substantially produced with a round cross-section, but with a fixing rib (6) at a location on the cross-sectional circumference, and the tyre carcase (12) is secured in the tyre bead as a result of being looped around the bead extension member, the fixing rib (6) of the bead extension member protruding into the space between the tyre carcase (12) and the looped-round carcase end (13).

2. Method according to claim 1, characterised in that a fabric ply (5) is inserted between the rubber profile (1) and the bead core (2) for the latter component parts to be rotatable relative to each other.

3. Method according to claim 2, characterised in that the spacer members (9, 11) which permit the rubber profile (1) and the bead core (2) to rotate relative to each other, are inserted permanently in the rubber profile (1).

4. Method according to claim 1, characterised in that the bead core (2) is fixed by the spacer members (8) of the vulcanising mould (7) being in the form of pins or webs.

5. Method according to claim 1, characterised in that the bead core (2) is disposed eccentrically in the rubber profile (1) in such a manner that, when a tyre is assembled, the distance from the centre of the core to the edge of the rubber profile facing the seating surface of the rim is substantially greater than the distance from the centre of the core to the axially internal edge of the rubber profile, four times the differential length corresponding substantially to the height of a rim flange.

FIG. 1

FIG. 2

FIG. 3

FIG. 4

1

FIG. 5

14

13

Axialrichtung
Wickeltrommel

12

6

16

1

2

15

Axialrichtung
Heizform

FIG. 6

17

12

19

20

21

22

6   1   2

15

18